# EUROPEAN PATENT SPECIFICATION

(11) **EP 2 636 996 B1**
(45) Date of publication and mention of the grant of the patent: **27.02.2019**
(21) Application number: 12197972.8
(22) Date of filing: 19.12.2012
(51) Int. Cl.: G01C 21/36

(54) **Navigation Device**
Navigationsvorrichtung
Dispositif de navigation

(30) Priority: 05.03.2012 JP 2012047957
(43) Date of publication of application: 11.09.2013
(73) Proprietor: Honda Motor Co., Ltd., Tokyo 107-8556 (JP)
(72) Inventor: Hoshi, Tomohiro, Saitama, 351-0193 (JP); Konno, Takeshi, Saitama, 351-0193 (JP); Maruyama, Kazuyuki, Saitama, 351-0193 (JP); Katayama, Mutsumi, Saitama, 351-0193 (JP); Senno, Masaharu, Saitama, 351-0193 (JP); Kataoka, Yuichi, Saitama, 351-0193 (JP)
(74) Representative: Beder, Jens

(56) References cited:
- EP-A1- 1 378 723
- EP-A2- 1 312 893
- WO-A1-2009/072725
- JP-A- 2002 023 620
- US-A1- 2003 163 250
- US-A1- 2007 106 464

## Description

The present invention relates to navigation devices and particularly to a navigation device that displays a driving route guide, facility information, etc. on a road map.

Conventionally, there is known a method in which, besides a driving route guide from the point of departure to the destination, various pieces of facility information on restaurants, public facilities, etc. are displayed as icons on a road map in screen display of a navigation device.

Japanese Patent No. 4007263 discloses a navigation device that limits the number of icons displayed on the screen by setting icons with low priority to the non-displayed state based on the priority order set by the user in advance when plural icons displayed on the map overlap with each other.

However, in this technique, although the overlapping of icons is eliminated and easiness of viewing the screen can be ensured, a display range larger than that of the icon is necessary when a text or the like is desired to be displayed on the map. Therefore, possibly the visibility of the whole map is affected and display of other icons is hidden in a wide range when the priority of display of the text is set high. Thus, the display form of the text needs to be improved.

Document WO2009/072725 A1 discloses a method and a system for dynamically arranging transparently displayed point of interest information including text on a map display.

Document EP1378723 A1 discloses a navigation device configured to display semi-transparent or non-transparent comment frames.

Document JP2002023620 A discloses a navigation device configured to display non-transparent comment frames in a non-overlapping way.

An object of the present invention is to solve the problem of the above-described related art and provide a navigation device that can ensure easiness of viewing the screen even when predetermined comments are displayed in addition to icons.

To achieve the above-described object, the present invention provides a navigation device (1) according to claim 1.

The present invention has a second characteristic in that the display controller (7) can deform the comment frame (Cr) in such a manner that the ratio of the length of the comment frame (Cr) along the vertical direction is increased if there is no room of an allocable area for the comment frame (Cr) in the horizontal direction.

The present invention has a third characteristic in that the display controller (7) can execute a linefeed in text composed of the comment characters (Cf) after a conjunction or a noun in the text when deforming the comment frame (Cr).

The present invention has a fourth characteristic in that the display controller (7) switches the area inside the comment frame (Cr) that is transparently or semi-transparently displayed to non-transparent display in response to predetermined operation.

The present invention has a fifth characteristic in that the display controller (7) can display the comment characters (Cf) having a color different from the color of the map information if the comment characters (Cf) are so displayed as to overlap with the map information.

The present invention has a sixth characteristic in that the navigation device (1) can further include a comment priority setting section (6) that sets priority for the comment (C) and the display controller (7) displays the comment (C) in decreasing order of the set priority.

The present invention has a seventh characteristic in that the display controller (7) can set the comment (C) to a non-displayed state from the comment (C) whose priority is on the lower side if overlapping with another comment is not eliminated although the comment (C) is displayed based on the priority.

The present invention has an eighth characteristic in that the display controller (7) can be so configured as to be capable of displaying a lead line (Ch) that couples the comment (C) with a position on a map corresponding to the comment (C).

According to the invention, the comment, which is apt to have a wide display area, is displayed on a map whereas the comment part is made transparent to thereby prevent the map from becoming less readable. In addition, the display range of the area thereof is so varied that the area is prevented from interfering with a displayed object such as another icon and the text of the comment can be changed by a linefeed and so forth in matching with the varied display range. Therefore, the display area is so varied that overlapping of display with another icon due to the display of the comment is prevented.

According to the second characteristic, the display controller deforms the comment frame in such a manner that the ratio of the length of the comment frame along the vertical direction is increased if there is no room of the allocable area for the comment frame in the horizontal direction. Therefore, the comment can be displayed without reduction in the amount of information attributed to the change in the shape of the comment frame, so that much information can be displayed without the lowering of easiness of viewing the map information.

According to the third characteristic, the display controller executes a linefeed in text composed of the comment characters after a conjunction or a noun in the text when deforming the comment frame. Therefore, a linefeed is not executed e.g. in the middle of a word in the text of the comment and the readability of the comment can be kept although a linefeed is executed because of insufficiency of space.

According to the fourth characteristic, the display controller switches the area inside the comment frame that is transparently or semi-transparently displayed to non-transparent display in response to predetermined operation. Therefore, the comment desired to be highlighted can be made more readable by non-transparently displaying the area inside the comment frame. That is, by permitting the state of the comment frame to be arbitrarily switched to the transparent and non-transparent state, easiness of viewing the map can be balanced with the readability of the comment.

According to the fifth characteristic, the display controller displays the comment characters having a color different from the color of the map information if the comment characters are so displayed as to overlap with the map information. Therefore, the readability of the comment characters can be kept even when the comment characters are so displayed as to overlap with display of road, shop, etc.

According to the sixth characteristic, the navigation device further includes a comment priority setting section that sets priority for the comment and the display controller displays the comment in decreasing order of the set priority. This can prevent a comment having high priority from being hidden by another comment having low priority to become invisible when plural comments are displayed.

According to the seventh characteristic, the display controller sets the comment to a non-displayed state from the comment whose priority is on the lower side if overlapping with another comment is not eliminated although the comment is displayed based on the priority. This can prevent the map and so forth from becoming less visible due to display of a large number of comments.

According to the eighth characteristic, the display controller is so configured as to be capable of displaying a lead line that couples the comment with a position on a map corresponding to the comment. Therefore, the correspondence relationship between the comment and the position on the map can be easily understood even when a large number of comments are displayed.

FIG. 1 is a block diagram showing the whole configuration of a navigation device according to one embodiment of the present invention.
FIG. 2 shows one example of a navigation screen displayed on a display section.
FIG. 3 is a flowchart showing the procedure of navigation comment display processing.
FIG. 4 is an explanatory diagram showing the state in which the lower left part of FIG. 2 is displayed in an enlarged manner.
FIG. 5 is an explanatory diagram showing the state in which the upper center part of FIG. 2 is displayed in an enlarged manner.
FIG. 6 is an explanatory diagram showing the state in which operation of selecting a predetermined comment is carried out.
FIG. 7 shows an example of screen display for arbitrarily setting the priority order of the comment.
FIG. 8 is a plurality of explanatory diagrams of a "rain avoidance function" realized by the combination of a navigation function and weather information.
FIG. 9 is a plurality of explanatory diagrams of the "rain avoidance function" realized by the combination of the navigation function and weather information.
FIG. 10 is an explanatory diagram of a "raincoat alarm function" as application of the "rain avoidance function."
FIG. 11 is an explanatory diagram of a "partner locator function" that allows understanding of the traveling states of others simultaneously with the traveling state of the own vehicle.

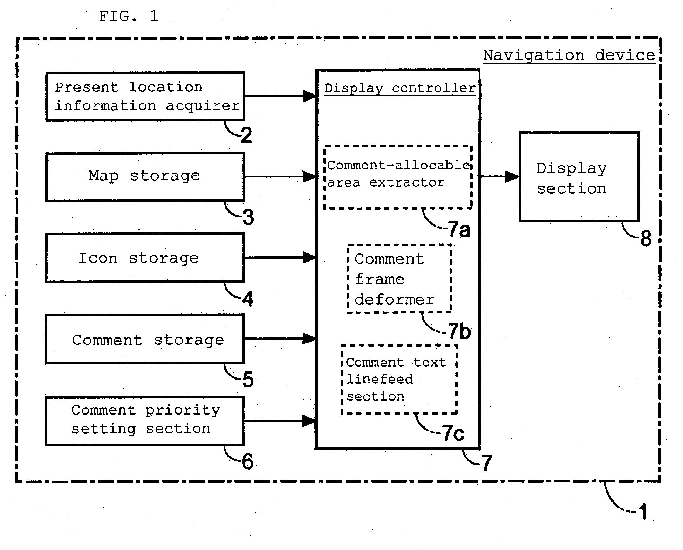

A preferred embodiment of the present invention will be described in detail below with reference to the drawings. FIG. 1 is a block diagram showing the whole configuration of a navigation device 1 according to one embodiment of the present invention. The navigation device 1 is a navigation device for the vehicle in which at least map information, a driving route guide, etc. can be displayed on a display section 8 formed of e.g. a liquid crystal display. The form of the navigation device 1 includes e.g. a built-in dedicated device embedded near driver's seat of a vehicle, a portable device removable from a vehicle, and a portable terminal in which predetermined software giving a navigation function is installed.

The present embodiment will be explained by using an example of screen display of a smartphone (mobile communication terminal) as a multi-function cell-phone in which software for navigation is installed. However, various modifications are available as the hardware configuration of the navigation device 1 as described above.

The navigation device 1 includes a present location information acquirer 2 that detects the present location of the own vehicle by using the global positioning system (GPS) and so forth and a map storage 3 that stores map information converted to data. The navigation device 1 further includes an icon storage 4 that stores icons schematically expressing various facilities and a comment storage 5 that stores comments for explanation of facilities and so forth. The navigation device 1 further includes a comment priority setting section 6 for arbitrarily setting the priority order of comments, a display controller 7 that displays map information including icons and comments and so forth, and the display section 8 formed of e.g. a liquid crystal display.

The map storage 3, the icon storage 4, and the comment storage 5 can be each configured by a nonvolatile memory or any of various kinds of recording media such as DVD-ROM and HDD. The display section 8 in the present embodiment is configured by a touch-panel-equipped liquid crystal display that allows touch operation, i.e. operation by direct contact with the screen. However, button, wireless remote controller, etc. can also be used for various kinds of operation for changing the state of the screen.

The display controller 7 includes a comment-allocable area extractor 7a that extracts a surplus area in which a comment can be disposed on the screen as the display section 8 and a comment frame deformer 7b that deforms the rectangle of a comment frame in order to display the comment without interference with an icon, another comment, etc. The display controller 7 further includes a comment text linefeed section 7c that executes a linefeed of a comment in association with deformation of the comment frame.

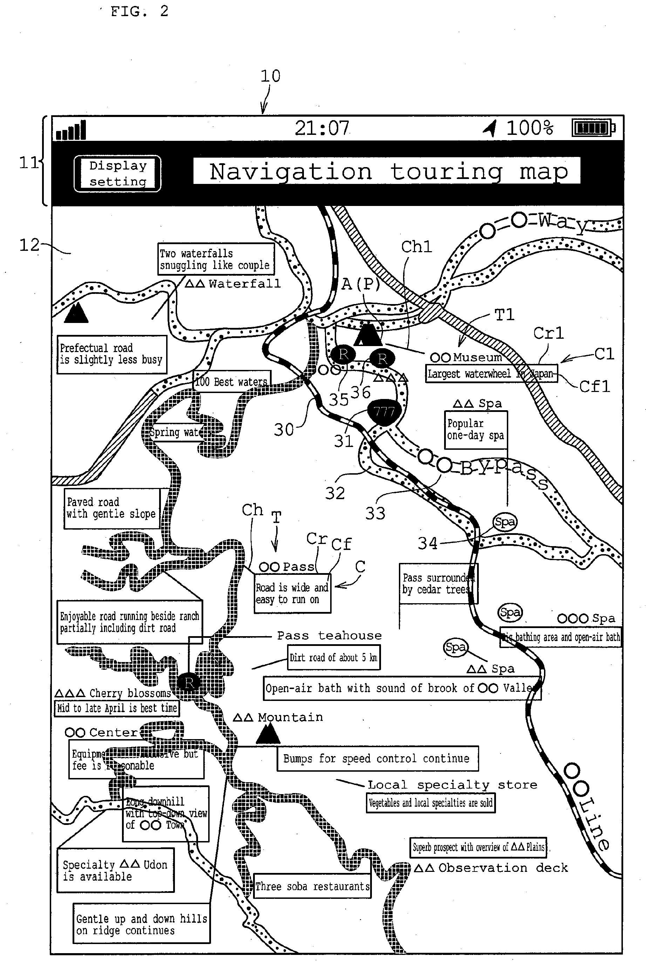

FIG. 2 shows one example of the navigation screen displayed by the display section 8. For the present embodiment, explanation will be made by taking as an example a screen 10 of the smartphone in which software for navigation is installed. At the upper part of the screen 10, a menu bar 11 that displays general information such as the reception intensity of radio waves, the time, and the remaining battery life, the title of the presently-displayed screen, etc. is disposed. As shown in this menu bar 11, a "navigation touring map" is displayed in a map display part 12.

In the map display part 12, map information such as a railroad 30, a route number guide sign 31 of a national road, a prefectural road, or so forth, various kinds of roads 32, and a road name 33 are displayed. The kinds of roads such as national road and prefectural road and the kinds of railroads such as railroads of Japan Railways (JR) and private railroads are expressed by differences in the width, color, design, etc. of the roads and railroads. Furthermore, as facility information relating to the map information, rest places 35 and 36, a spa 34, and a tourist facility A are each shown by an icon. The subjects of icon display include not only facilities as buildings but also subjects with various forms, such as the top of a mountain, an observation deck, and a predetermined leg of a road.

Moreover, a large number of comments C formed of explanatory text for facility information and so forth are displayed in the map display part 12. As the subjects of comment display, besides facility information shown by icons, e.g. the following subjects can be set: observation places, bits of knowledge, notable spots, sights, hot springs, one-day spas, foods, accommodations, accesses, shortcuts, dirt roads, sightseeing comments, recommended routes, and road comments.

The comment C is configured by a comment title T (e.g. "oo Pass"), comment characters Cf composed of character information (e.g. "Road is wide and easy to run on"), a rectangular comment frame Cr as the display frame of the comment characters Cf, and a lead line Ch coupling the comment frame Cr and the subject. As the comment C, only the comment title may be displayed or only the comment frame and comment characters may be displayed depending on the kind of information and the amount of description. In the present embodiment, an example in which the comment frame is a rectangle is explained. However, the shape of the comment frame is not limited to the rectangle and may be another shape such as a circle.

The comment title T, the comment characters Cf, the comment frame Cr, and the lead line Ch are each drawn on the map information by a colored opaque line in an overlapped manner. Therefore, the map information becomes invisible at the part with which this line overlaps. However, the present embodiment is so configured that the map information inside the comment frame Cr is seen through the area inside the comment frame Cr even when the comment C is displayed by transparently displaying the area inside the comment frame Cr except for the comment characters Cf, i.e. by displaying only the rectangular frame.

According to this configuration, the map information can be recognized even in the state in which a large number of comments C are displayed, which can enhance the convenience of the navigation device. It is also possible for the area inside the comment frame Cr to be semi-transparent, i.e. show colored display that is so dilute that the map information is seen through this area. Furthermore, the comment characters Cf can also be so displayed as to be semi-transparently colored.

Besides, various ingenuities are made about the form of display by the above-described display controller 7 (see FIG. 1) in order to ensure easiness of viewing the comment C and the map information. First, the display controller 7 displays the respective objects in such a manner that overlapping between icons, between comments, and between icon and comment does not occur. For this purpose, the display controller 7 always calculates the object-allocable area of the icons and comments and verifies whether or not the icons and comments can be disposed within this object-allocable area.

Furthermore, the display controller 7 is so configured as to automatically change the rectangle of the comment frame Cr so that the comment can be disposed within the above-described object-allocable area when a large number of comments to be displayed exist. This function will be explained by using a comment C1 displayed on the upper right side in the diagram. The comment C1 is composed of a comment title T1, comment characters Cf1, and a comment frame Cr1 surrounding it, and a lead line Ch1 is displayed between the comment C1 and an icon A as the corresponding facility. Each comment is so displayed as to allow recognition of correspondence with a comment-corresponding point P to which the comment should be given. The comment-corresponding point P of the comment C1 is equivalent to the center position of the icon A and the correspondence relationship between the comment C1 and the comment-corresponding point P is shown by the lead line Ch1 in this example.

When this comment C1 is compared with the above-described comment C, the length of the whole text is almost the same between the comment characters Cf1 of the comment C1 ("Largest waterwheel in Japan") and the comment characters Cf of the comment C ("Road is wide and easy to run on"). However, for the latter, a linefeed is executed in the middle of the comment text to make two lines in order to avoid interference with an adjacent comment and the comment frame Cr is also deformed to a rectangle in which the ratio of the length along the vertical direction is higher.

Next, each of the comment title T, the comment frame Cr, the comment characters Cf, and the lead line Ch, which configure the comment C, is arbitrarily colored. This coloring makes it possible to identify what kind of subject corresponds to the comment at a glance by using different colors for the comments relating to the road and the comments relating to the facility for example. At this time, it is also possible to color the comment frame Cr and the comment characters Cf by colors different from each other.

When coloring is used also on the side of the map information such as roads, the coloring of the comment frame Cr and the comment characters Cf can be changed so that the color of them may be prevented from being the same as that of the map information. Furthermore, it is also possible that a comment just updated is made conspicuous by special color, bold characters, blink display, etc.

Moreover, when the number of displayable comments C existing in the screen is so large that the comments C interfere with each other in the screen, the comments C may be displayed in order of decreasing priority in accordance with the priority order set in advance on a genre-by-genre basis. The setting of this priority order will be described later.

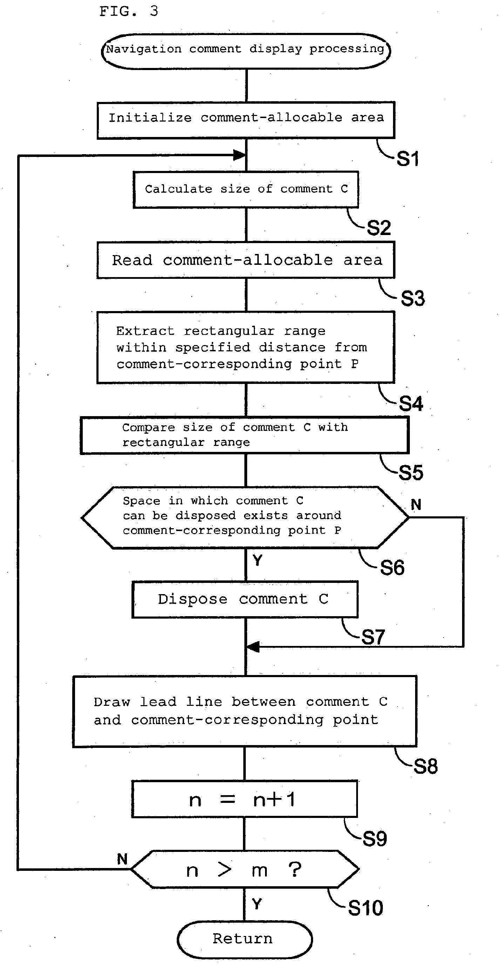

FIG. 3 is a flowchart showing the procedure of navigation comment display processing. This flowchart shows a flow until the rectangle of the comment frame Cr is appropriately deformed and the comment C is disposed in a comment-allocable area when a large number of displayable comments exist, by taking the comment C shown in FIG. 2 as an example.

First, in a step S1, initialization for calculating the comment-allocable area, which is the area other than the icon part, in the map display part 12 (see FIG. 2) is executed. In a step S2, the size of the comment C is calculated by the comment-allocable area extractor 7a (see FIG. 1) of the display controller 7 based on the contents of the comment stored in the comment storage 5. In a step S3, reading of the comment-allocable area is executed.

In a step S4, a rectangle that can be formed in a specified range whose center is the comment-corresponding point P is extracted. In a step S5, the size of the comment C is compared with the rectangle. In a step S6, based on this comparison result, it is determined whether or not a space in which the comment C can be disposed exists around the comment-corresponding point P.

If the positive determination is made in the step S6, the processing proceeds to a step S7 and the comment C is disposed. At this time, according to need, the rectangle of the comment frame Cr is deformed by the comment frame deformer 7b and a linefeed is executed at a predetermined position in the text of the comment characters Cf by the comment text linefeed section 7c. In the next step S8, the lead line Ch is drawn between the comment C and the comment-corresponding point P. If the negative determination is made in the step S6, the processing proceeds to the step S8 by skipping the step S7.

Then, in a step S9, the number n of comments is set to n + 1 (n = n + 1). That is, the variable is incremented. In a step S10, it is determined whether or not the number n of displayed comments is larger than the calculated upper limit m of displayable comments. If the positive determination is made, the series of control is ended. If the negative determination is made in the step S10, it is determined that there is a room for increasing the number of displayed comments and the processing returns to the step S2.

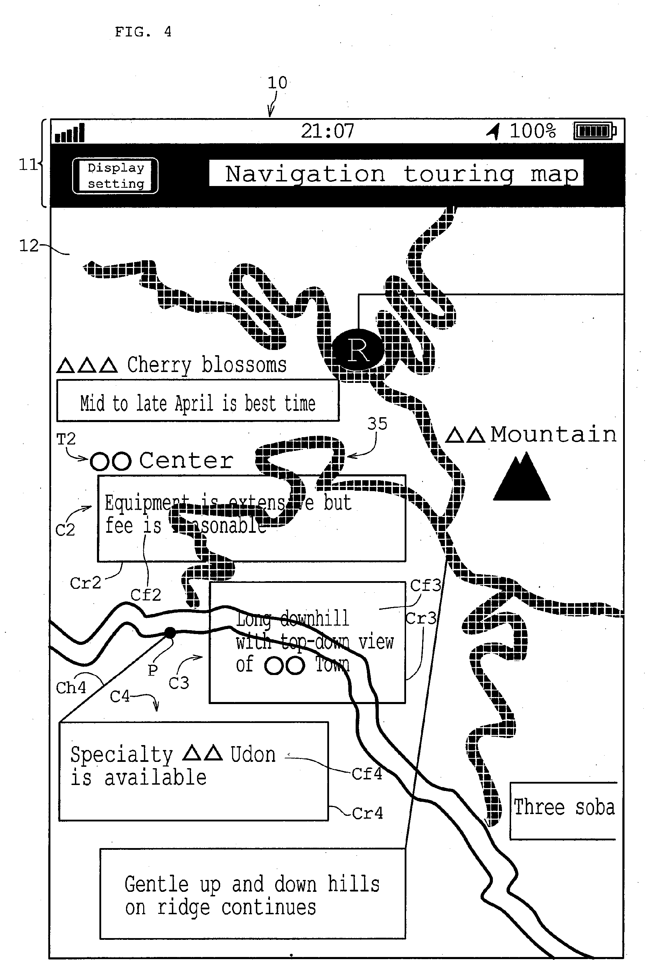

FIG. 4 is an explanatory diagram showing the state in which the lower left part of FIG. 2 is displayed in an enlarged manner. The same symbol as that in the above description denotes the same or equivalent part. When there is a room in the space around the comment-corresponding point P, the comment is so displayed that overlapping thereof with road display is prevented as much as possible in addition to overlapping with icons. For example, a comment frame Cr4 to display comment characters Cf4 of a comment C4 is associated with the comment-corresponding point P by a lead line Ch4 so that the comment frame Cr4 may be prevented from overlapping with road display. When the comment C corresponds to a predetermined icon, the comment-corresponding point P of the comment C can be set to the center of this icon.

In contrast, when the number of displayable comments is large and all comments cannot be displayed with only the space in which road display is absent, comments are so displayed as to be overlapped over road display like comments C2 and C3. However, in the present embodiment, the areas inside comment frames Cr2 and Cr3 are displayed as transparent or semi-transparent areas. Therefore, the road shape does not become unclear even when a large number of comments are displayed and thus a navigation screen providing high convenience can be obtained. Specifically, the display controller 7 transparently or semi-transparently displays the area inside the comment frame Cr except for the comment characters Cf. In addition, the display controller 7 displays the comment frame Cr whose rectangle is deformed to fall within a predetermined displayable range so that at least overlapping of the comment frame Cr with the icon A may be avoided. Furthermore, although the comment characters Cf2 and Cf3 are so displayed as to be overlapped over the map information, the applied color thereof is set different from that of the underlying map information. Therefore, hindrance to recognition of the map information by the comment characters Cf2 and Cf3 is also suppressed to the minimum.

Moreover, a linefeed is executed in the comment text in the following manner in order to avoid interference with another comment and so forth. Specifically, for example, in the comment characters Cf2, a linefeed is executed between the former part of "Equipment is extensive but" and the latter part of "fee is reasonable." That is, the linefeed is executed after a noun or a conjunction so that the contents of the text can be easily understood.

When the scale size of the display screen is changed, the sizes of comments and icons may also be enlarged or reduced in association with the enlargement or reduction of the map information. Furthermore, it is also possible to employ such a setting that the sizes of comments and icons are not changed irrespective of the scale size of the map information. In FIG. 4, the sizes of comments and icons are also enlarged in association with increase in the scale size. However, these display settings can be arbitrarily changed.

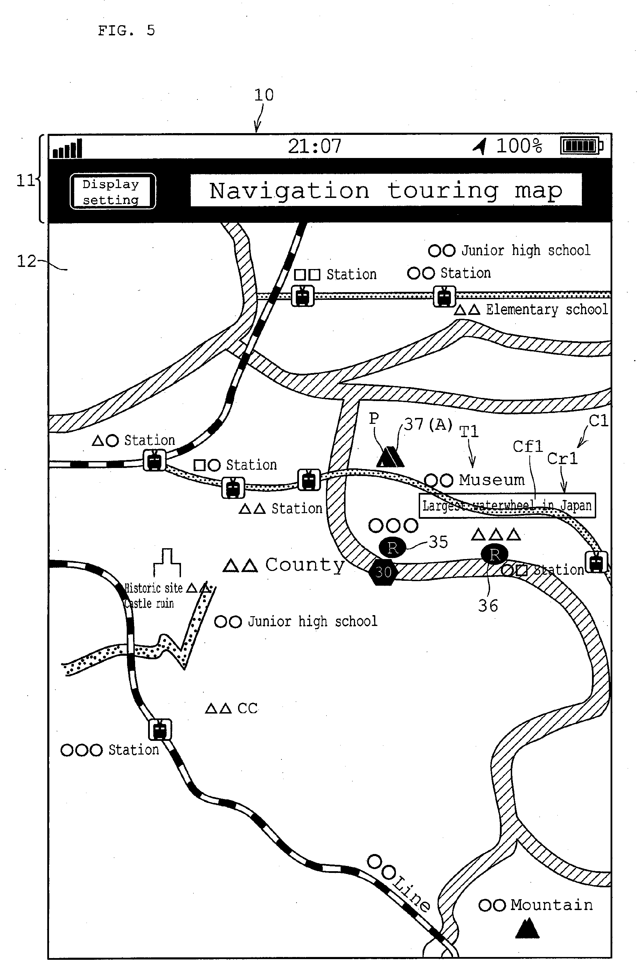

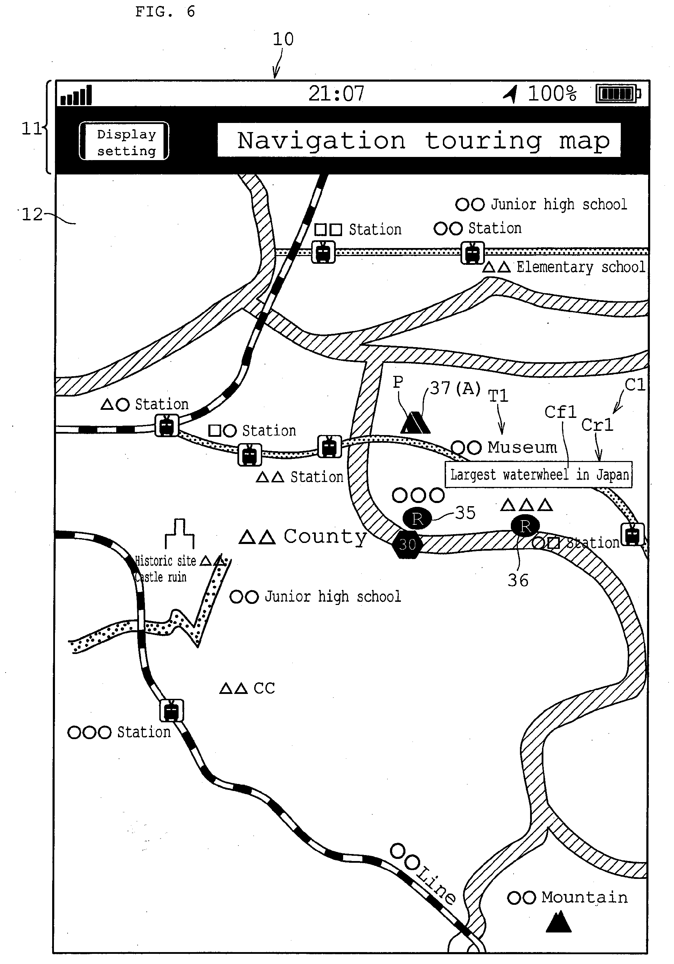

FIG. 5 is an explanatory diagram showing the state in which the upper center part of FIG. 2 is displayed in an enlarged manner. FIG. 6 is an explanatory diagram showing the state in which operation of selecting the comment C1 shown in FIG. 5 has been carried out. FIG. 5 shows the state in which the configuration is so set that the sizes of icons do not change even when the scale size of the map information is increased whereas the amount of information including the names of schools and railroad stations has increased. An icon 37 corresponding to the comment title T1 is equivalent to the icon A shown in FIG. 2. In FIG. 2, the lead line Ch1 is drawn between the comment title T1 and the icon A. In contrast, in FIG. 5, the comment title T1 and the comment frame Cr are disposed close to each other and the lead line ch1 is removed because the surplus space on the right side of the icon 37 is enlarged in association with the change in the scale size.

When each comment is linked to detailed information that cannot be completely displayed in the comment frame, this detailed information can be viewed by carrying out operation of selecting this comment. According to the invention, when the comment C1 is selected, the area inside the comment frame Cr1 is switched from transparent or semi-transparent display to non-transparent display as shown in FIG. 6. Thereby, it can be visually recognized that this comment C1 is selected. The selection of the comment can be executed by touching the area in the comment frame in the present embodiment, in which a touch-panel-equipped liquid crystal display is applied to the display section 8. Furthermore, the configuration is so set that the user can further proceed to the hierarchical level at which the detailed information can be viewed when touching the comment again in the state in which this comment has been selected. It is also possible to directly proceed to the viewing of the detailed information by keeping the state of the first touch to make the long-pressed state.

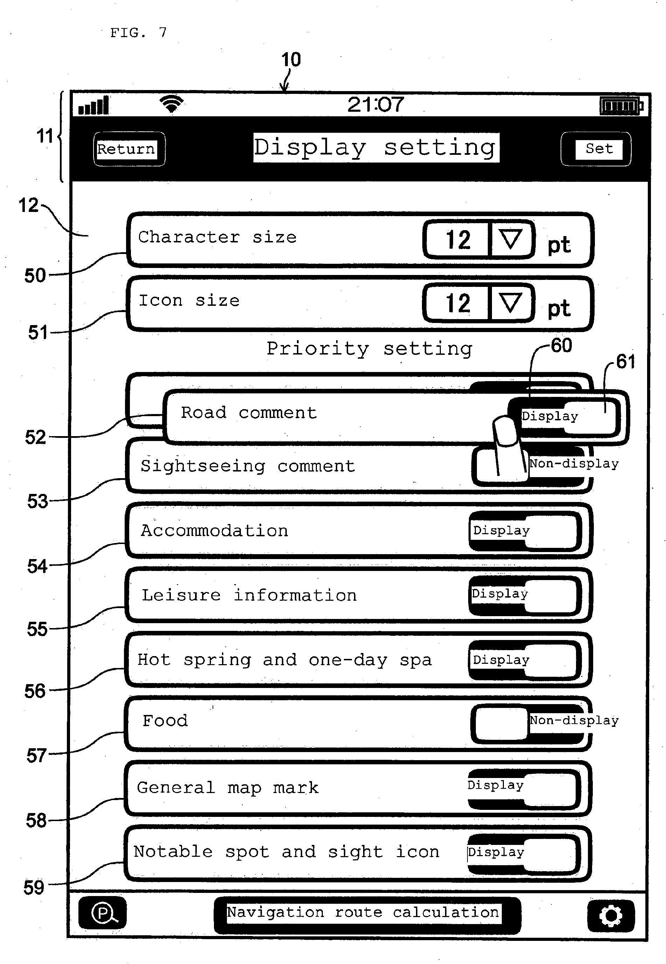

FIG. 7 shows an example of screen display for setting the priority order of the comment. The display controller 7 is so set as to sequentially display comments on the screen from the genre with the highest priority based on the priority order given for each of the genres of the comments, and as not to display comments whose priority is the lower side on the screen when the comment-allocable area is insufficient. That is, when overlapping with other comments cannot be eliminated although the comments are displayed based on the priority order, comments are set to the non-displayed state from the comment with the lowest priority. This can prevent the map and so forth from becoming less visible due to the display of a large number of comments.

In the example shown in FIG. 7, the genre setting is so made that the priority decreases in the direction from the upper side to the lower side of the screen. Specifically, a road comment 52 has the highest priority. Next, the priority is set lower in order of accommodation 54, leisure information 55, hot spring and one-day spa 56, and so forth. That is, the priority becomes lower as the position in the screen becomes closer to the lower end. As operation for setting the priority, for example, a vehicle occupant sets a display key 60 or a non-display key 61 by finger operation. Alternatively, the setting is made by slide by finger operation.

In the example shown in FIG. 7, a sightseeing comment 53 is set to the non-displayed state. When it is changed to the displayed state, the priority is so set that the sightseeing comment 53 has the second highest priority next to the road comment 52. In this manner, the setting of the priority can be varied depending on the placement position of each genre setting and the state (displayed or non-displayed) of each genre setting.

In this screen, the display size setting of the comment characters Cf and the icon A can also be executed by a character size setting window 50 and an icon size setting window 51. As the genres for which the priority setting of the comment is executed, the road comment 52, the sightseeing comment 53, the accommodation 54, the leisure information 55, the hot spring and one-day spa 56, a food 57, a general map mark 58, a notable spot and sight icon 59, etc. are set. The priority levels of these genres can be interchanged with each other and display selection by the display key 60 or the non-display key 61 can also be executed for the respective genres.

The form and structure of the navigation device, the display form of the comment, the mode such as the shape, color, and depth of the comment title, the comment frame, the comment characters, etc., the mode of the map information including the icon, and so forth are not limited to the above-described embodiment and various changes can be made.

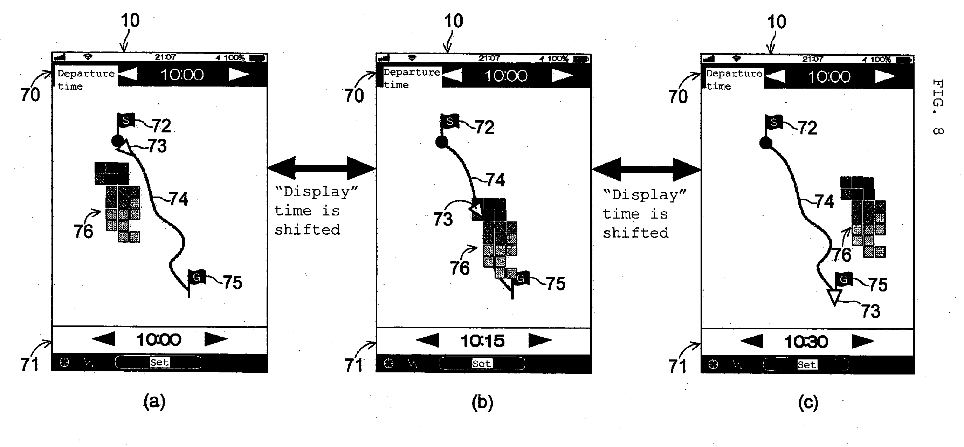

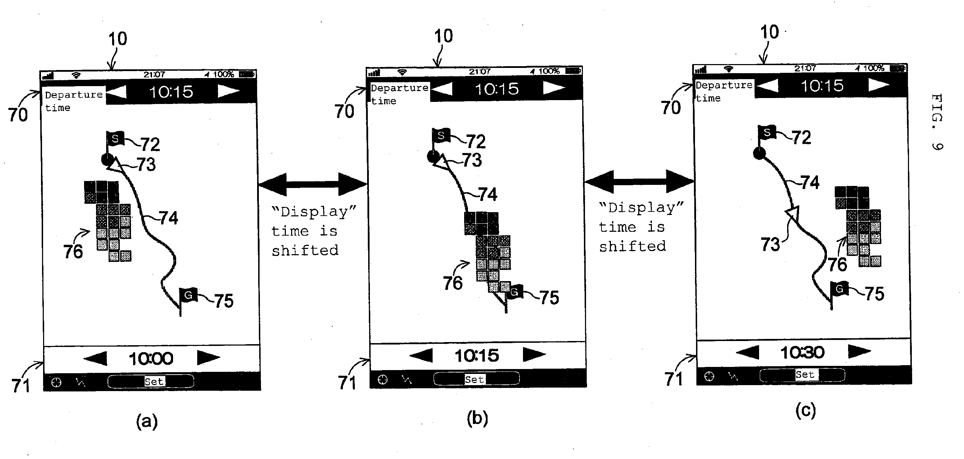

FIGS. 8 and 9 are explanatory diagrams of a "rain avoidance function" realized by the combination of the navigation function and weather information. The navigation device 1 can obtain the present positions of rain clouds and weather forecast information from various kinds of weather information service institutions by using wireless communication measures such as a cell-phone line and the Internet. According to the "rain avoidance function" explained here, when route guidance from a point 72 of departure to a destination 75 is executed, the movement of rain clouds is considered in conjunction with the route guidance. This makes it possible to predict the situation in which the vehicle gets caught in the rain in the traveling and take a countermeasure against it in advance.

FIG. 8 corresponds to the case in which, when a route 74 from the point 72 of departure to the destination 75 is guided, a departure at predetermined time will make an own vehicle 73 encounter a rain cloud 76 on the route 74. Specifically, if the departure time is set to 10:00 by a departure time window 70, it is expected that the vehicle 73 arrives at the destination 75 at 10:30. In this case, the following traveling process can be simulated. Specifically, if the vehicle 73 departs at 10:00 shown in (a), the vehicle 73 will pass under the rain cloud in the middle of the route 74 at 10:15 shown in (b) and then arrive at the destination 75 at 10:30 shown in (c).

So, as shown in FIG. 9, the departure time is set to 10:15 by operating an arrow key in the departure time window 70 and a simulation is performed again. In this case, the following traveling process can be predicted. Specifically, if the vehicle 73 does not depart yet at 10:00 shown in (a) but departs at 10:15 shown in (b), the vehicle 73 is running in the middle of the route 74 at 10:30 shown in (c) after the rain cloud 76 has passed over the route 74. In this case, the arrival time is predicted to be e.g. 10:45 and it may also be displayed. Using this "rain avoidance function" makes it possible to predict an encounter with a rain cloud in advance and depart with preparation of a raincoat or the like and to travel without an encounter with a rain cloud by putting forward or back the departure time. For the rain cloud 76, a thicker cloud part, i.e. part where the change of rainfall is higher, can be represented by a deeper color or a more conspicuous color.

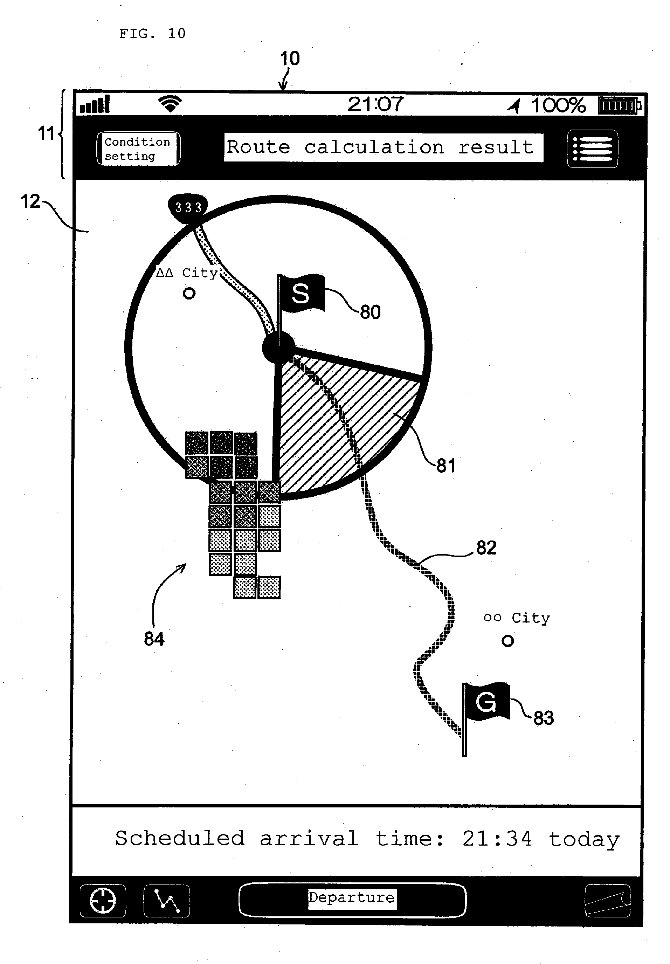

FIG. 10 is an explanatory diagram of a "raincoat alarm function" as application of the above-described "rain avoidance function." This "raincoat alarm function" is the following function. Specifically, in the case of traveling on a route 82 from a point 80 of departure to a destination 83 in accordance with route guidance, this function issues an alarm to prompt the vehicle occupant to wear a rain gear such as a raincoat in response to the entry of a rain cloud 84 into an alarm range 81. The range of the alarm can be set to e.g. a range equivalent to areas that exist on both sides of the traveling direction line and each have a predetermined angle from the traveling direction line in the circle of a radius of several kilometers from the own vehicle. The navigation device 1 has alarming measures such as a vibrator and a speaker besides the liquid crystal display as the display section 8 and can prompt the vehicle occupant to wear a rain gear not only by alarm display on the screen but also by combination with vibration and alarm sound.

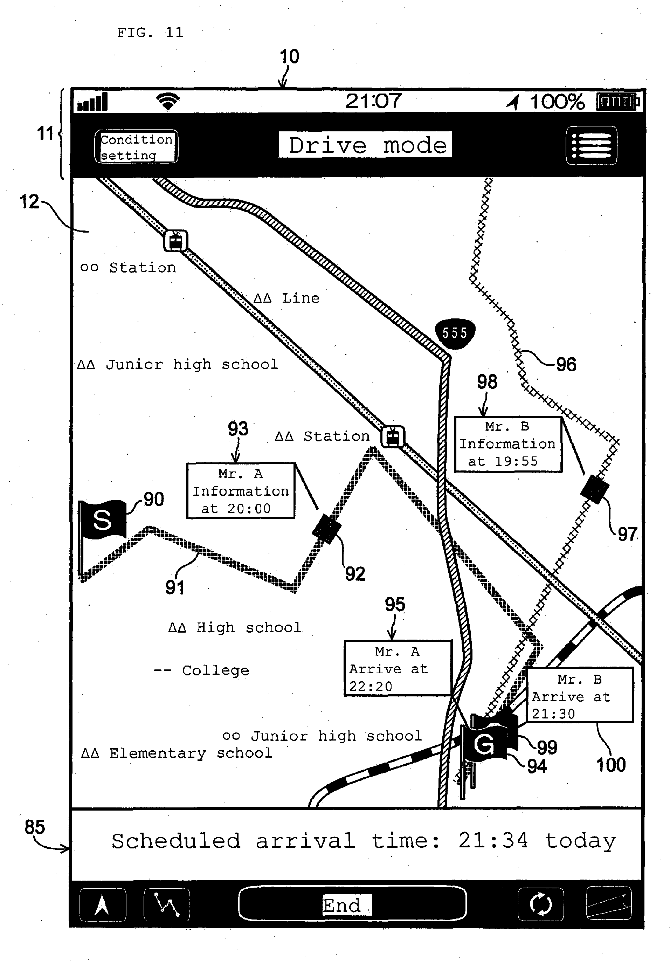

FIG. 11 is an explanatory diagram of a "partner locator function" that allows understanding of the traveling states of others simultaneously with the traveling state of the own vehicle. The "partner locator function" is a function to share navigation information by plural navigation devices to thereby make it possible to know e.g. the present location and predicted arrival time of friends, Mr. A and Mr. B, simultaneously with the navigation information of the own vehicle. This function is suitable for e.g. a rendezvous at a gathering place.

This diagram shows the case in which the state of travelling of Mr. A and Mr. B on guided routes to destinations 94 and 99 as the gathering place is displayed on one screen. Mr. A, in other words, a navigation device 92 carried by Mr. A, is scheduled to travel on a route 91 from a point 90 of departure to arrive at the destination 94 at 22:20 and present location information 93 acquired at 20:00 is displayed as a comment. Furthermore, a navigation device 97 carried by Mr. B is scheduled to travel on a route 96 from a point of departure outside the screen range to arrive at the destination 99 at 21:30 and present location information 98 acquired at 19:55 is displayed as a comment.

Furthermore, regarding the own vehicle, which is not displayed in this screen, it is shown in a scheduled arrival time window 85 at present time of 21:07 that the own vehicle is scheduled to arrive at the destination at 21:34. In addition, this own vehicle information is shared also by the navigation devices 92 and 97 of Mr. A and Mr. B, respectively. This makes it possible to understand each other's present location and scheduled arrival time and easily make prior announcement and schedule adjustment when someone is going to be late for the gathering time. Furthermore, for example also when vehicles are separated from each other because of e.g. waiting at a traffic light in traveling with plural vehicles, the behavior of the partners can be always understood and thus the traveling can be continued at ease.

1··· Navigation device, 2··· Present location information acquire, 3··· Map storage, 4··· Icon storage, 5··· Comment storage, 6··· Comment priority setting section, 7··· Display controller, 7a··· Comment-allocable area extractor, 7b··· Comment frame deformer, 7c··· Comment text linefeed section, 8··· Display section (touch-panel-equipped liquid crystal display), 10··· Screen, 12··· Map display part, A··· Icon, C··· Comment, Cf.··· Comment character, Cr··· Comment frame, T··· Comment title

## Claims

1. A navigation device (1) including:
• a present location acquirer (2) configured to acquire own present location information by using a global positioning system or another measure;
• a map storage (3) configured to store map information including at least road information and facility information;
• an icon storage (4) configured to store an icon (A) relating to the map information;
• a display controller (7) configured to control a display form of at least the map information and the icon (A) that are displayed on a display section (8);
• a comment storage (5) configured to store at least one comment (C) as text information relating to the map information, wherein each of the at least one comment (C) includes comment characters (Cf) and a comment frame (Cr) surrounding the comment characters (Cf), wherein
• the display controller (7) is configured to make, for each comment (C) of the at least one comment (C), a display range of the comment frame (Cr) transparent and vary a shape of an area of the display range to a displayable range, and the display controller (7) is configured to display, for each comment (C) of the at least one comment (C), the comment (C) composed of the comment characters (Cf) and the comment frame (Cr) within the shape, wherein the displayable range is a range within which the comment frame (Cr) does not overlap with other icons (A),
**characterised in that** the display controller (7) is configured to switch an area inside a comment frame (Cr) of the at least one comment frame (Cr) that is transparently or semi-transparently displayed to a non-transparent display in response to a touching operation of a user of the navigation device (1) of touching the area inside the comment frame (Cr).

2. The navigation device according to claim 1, wherein the display controller (7) is configured to display the comment characters (Cf) having a color different from a color of the map information if the comment characters (Cf) are so displayed as to overlap with the map information.

3. The navigation device according to any of claims 1 to 2, wherein
the display controller (7) is so configured as to be capable of displaying a lead line (Ch) that couples each of the at least one comment (C) with a corresponding position on a map corresponding to the comment (C).

## Patentansprüche

1. Navigationsgerät (1) aufweisend:
einen Akquirierer der momentanen Position (2), der eingerichtet ist, um die eigene, momentane Positionsinformation durch Verwenden eines globalen Positioniersystems zu erlangen, oder eines anderen Maßes;
einen Kartenspeicher (3), der eingerichtet ist, um Karteninformation zu speichern, aufweisend wenigstens Straßeninformation und Infrastrukturinformation;
einen Piktogrammspeicher (4), der eingerichtet ist, um ein Piktogramm (A) in Bezug auf Karteninformation zu speichern;
eine Bildschirmsteuerung (7), die eingerichtet ist eine Bildschirmform wenigstens der Karteninformation und des Piktogramms (A) zu steuern, die in einem Bildschirmbereich (8) dargestellt werden;
Kommentarspeicher (5), der eingerichtet ist, um wenigstens einen Kommentar (C) als Textinformation bezüglich der Karteninformation zu speichern, wobei jeder der Kommentare (C) Kommentarbuchstaben (Cf) und einen Kommentarrahmen (Cr) aufweist, der die Kommentarbuchstaben (Cf) umgibt, wobei
die Bildschirmsteuerung (7) eingerichtet ist, um, für jeden Kommentar (C) des wenigstens einen Kommentars (C) einen Anzeigebereich des Kommentarrahmens (Cr) transparent zu machen und eine Form eines Bereichs des Anzeigebereichs auf einen anzeigbaren Bereich zu variieren, und wobei die Bildschirmsteuerung (7) eingerichtet ist, um, für jeden Kommentar (C) des wenigstens einen Kommentars (C), den Kommentar (C) bestehend aus den Kommentarbuchstaben (Cf) und dem Kommentarrahmen (Cr) innerhalb der Form anzuzeigen, wobei der Anzeigebereich ein Bereich ist, innerhalb dessen der Kommentarrahmen (Cr) nicht mit anderen Piktogrammen (A) überlappt,
**dadurch gekennzeichnet, dass**
die Bildschirmsteuerung (7) eingerichtet ist, um einen Bereich innerhalb eines Kommentarrahmens (Cr) der wenigstens einen Kommentarrahmen (Cr) umzuschalten, der transparent oder halbtransparent angezeigt wird, zu einer nicht transparenten Anzeige in Reaktion auf eine Berührungsbedienung eines Nutzers des Navigationsgeräts (1) des Berühren des Bereichs innerhalb des Kommentarrahmens (Cr).

2. Navigationsgerät nach Anspruch 1, wobei die Bildschirmsteuerung (7) eingerichtet ist, um die Kommentarbuchstaben (Cf) mit einer Farbe anzuzeigen, welche von einer Farbe der Karteninformation verschieden ist, wenn die Kommentarbuchstaben (Cf) so angezeigt werden, dass sie mit der Karteninformation überlappen.

3. Navigationsgerät gemäß einem der Ansprüche 1 bis 2, wobei die Bildschirmsteuerung (7) so eingerichtet ist, dass sie fähig ist, eine Führungslinie (Ch) anzuzeigen, welche jeden der Kommentare (C) mit einer entsprechenden Position auf einer Karte entsprechend dem Kommentar (C).

## Revendications

1. Dispositif de navigation (1) comportant :
• un dispositif d'acquisition de localisation actuelle (2) configuré pour acquérir ses propres informations de localisation actuelle à l'aide d'un système de positionnement mondial ou d'une autre mesure ;
• un stockage de carte (3) configuré pour stocker des informations de carte comportant au moins une information routière et une information d'installation ;
• un stockage d'icône (4) configuré pour stocker une icône (A) relative aux informations de carte ;
• un contrôleur d'affichage (7) configuré pour contrôler une forme d'affichage d'au moins les informations de carte et l'icône (A) qui sont affichées sur une section d'affichage (8) ;
• un stockage de commentaires (5) configuré pour stocker au moins un commentaire (C) comme information de texte relative aux informations de carte, dans lequel chacun de l'au moins un commentaire (C) comporte des caractères de commentaire (Cf) et un cadre de commentaire (Cr) entourant les caractères de commentaire (Cf), dans lequel
• le contrôleur d'affichage (7) est configuré pour créer, pour chaque commentaire (C) de l'au moins un commentaire (C), une plage d'affichage du cadre de commentaire (Cr) transparent et modifier une forme d'une zone de la plage d'affichage en une plage affichable, et le contrôleur d'affichage (7) est configuré pour afficher, pour chaque commentaire (C) de l'au moins un commentaire (C), le commentaire (C) composé des caractères de commentaire (Cf) et du cadre de commentaire (Cr) dans la forme, dans lequel la plage affichable est une plage dans laquelle le cadre de commentaire (Cr) ne chevauche pas d'autres icônes (A),
**caractérisé en ce que** le contrôleur d'affichage (7) est configuré pour faire basculer une zone à l'intérieur d'un cadre de commentaire (Cr) de l'au moins un cadre de commentaire (Cr) qui est affiché en transparence ou en semi transparence sur un affichage non-transparent en réponse à une opération tactile d'un utilisateur du dispositif de navigation (1) consistant à toucher la zone à l'intérieur du cadre de commentaire (Cr).

2. Dispositif de navigation selon la revendication 1, dans lequel le contrôleur d'affichage (7) est configuré pour afficher les caractères de commentaire (Cf) ayant une couleur différente d'une couleur des informations de carte si les caractères de commentaire (Cf) sont affichés de manière à chevaucher les informations de carte.

3. Dispositif de navigation selon l'une des revendications 1 à 2, dans lequel
le contrôleur d'affichage (7) est configuré de manière à pouvoir afficher une ligne de connexion (Ch) qui couple chacun de l'au moins un commentaire (C) à une position correspondante sur une carte correspondant au commentaire (C).
